# EUROPEAN PATENT APPLICATION

(11) **EP 4 117 104 A1**
(43) Date of publication of application: **11.01.2023**
(21) Application number: 21929822.1
(22) Date of filing: 13.08.2021
(51) Int. Cl.: H01M 50/446, H01M 50/449, H01M 50/451, H01M 50/491, H01M 10/0525

(54) **COMPOSITE LITHIUM COMPENSATION DIAPHRAGM AND SECONDARY BATTERY COMPRISING SAME**

(30) Priority: 12.03.2021 CN 202110271400
(71) Applicant: Tianjin EV Energies Co., Ltd., Tianjin 300380 (CN)
(72) Inventor: LI, Wenwen, Tianjin 300380 (CN); LIU, Feng, Tianjin 300380 (CN); DENG, Haifu, Tianjin 300380 (CN); LI, Xingwang, Tianjin 300380 (CN); WANG, Junzi, Tianjin 300380 (CN)
(74) Representative: Cabinet Beaumont
(86) International application number: PCT/CN2021/112378
(87) International publication number: WO 2022/188355

(57) **Abstract**

The present application provides a composite lithium compensation diaphragm and a secondary battery comprising same. The composite lithium compensation diaphragm comprises a porous base membrane, wherein a lithium-containing layer is arranged on one side of the porous base membrane; the lithium-containing layer comprises a lithium source, inorganic ceramic powder and a binder; the lithium source forms a gradient distribution in the thickness direction of the lithium-containing layer; and the mass percentage of the lithium source on a side close to the surface of the porous base membrane is relatively low.

## Description

### TECHNICAL FIELD

The present application belongs to the technical field of lithium ion battery, and relates to a composite lithium supplement separator and a secondary battery thereof.

### BACKGROUND

Owing to the advantages of high energy density, long cycle life, environmental protection, no memory effect and the like, the lithium ion secondary battery has gradually developed into one of the most promising secondary batteries, and has been applied in various fields, such as mobile phones, laptops, digital cameras, portable devices, electric vehicles and energy storage devices.

In lithium secondary batteries, a solid electrolyte interphase (SEI) film will be generated on the surface of negative electrode during the initial charge process, which consumes a large amount of lithium ions that get off the positive electrode material, resulting in an irreversible loss of positive electrode capacity. In addition, the active lithium is continuously consumed during the long-term cycling and storage of lithium batteries. Especially, in order to satisfy the high energy demands, high-capacity materials such as the silicon-carbon are applied to the negative electrode plate by researchers; however, those materials have low initial coulomb efficiency, and have an irreversible capacity loss of up to 40% approximately resulting from the consumption in SEI film-forming during the initial charge and discharge. Therefore, it has become one of research focus currently in the field of lithium ion secondary battery how the active lithium loss of the battery cells can be compensated so as to improve the initial capacity and cycle life of the battery cell.

Aiming at the problem that how to compensate for the active lithium loss of the battery cells, the current main solutions are: (1) Lithium supplement through negative electrode plate: lithium foil or lithium powder is loaded on the negative electrode plate to provide an additional source of active lithium. Such method is complex in process and highly requires the production environment. (2) Lithium supplement additive for positive electrode: a lithium supplement additive that has a high level of irreversible lithium deintercalation is introduced into the positive electrode. However, with such method, there are irreversible components of positive electrode remaining in the positive electrode plate, which has a negative effect on various performances of the battery cell such as internal resistance. The method, based on introducing lithium supplement layer such as lithium powder, lithium foil or lithium compounds to the positive or negative electrode surface, has a complex process as well as certain safety risks, because the lithium supplement layer has poor thermal stability, and the positive and negative electrode have high reactivity while the baking temperature for electrode plate is relatively high. (3) The separator can be added with a lithium-containing coating, and the active lithium of the lithium-containing layer can compensate for the irreversible loss of the negative electrode film formation process. The separator has low reactivity and the lithium supplement layer on its surface has simpler treating process than the positive and negative electrode plates, so the introduction of a lithium-containing layer on the separator has certain advantages over the positive and negative electrode plates. However, such coating may affect the lithium ion permeability of the separator, which may cause problems such as deterioration of cycle life and poor kinetic performance.

CN203574049U discloses a lithium ion battery separator, specifically lithium metal loaded on the surface of a porous matrix membrane, wherein the lithium metal was in the shape of particles, filaments or flakes. In such separator structure, lithium metal was contact with the porous matrix membrane directly, and due to the soft texture of lithium, lithium was prone to enter the separator's pore and keep remaining, therefor resulting in pore-blocking, and affecting lithium ionic conductivity of the separator. CN105932206A discloses a composite lithium supplement separator, in which a ceramic layer was first coated on the surface of the porous matrix membrane, followed by the introduction of a lithium-containing layer. However, the lithium metal layer did not include a protective layer on its surface, and the lithium layer would reacted with the environment under contact, which might lead to deactivation of partial active lithium or even pose a safety risk.

### SUMMARY

An object of the present application is to provide a composite lithium supplement separator and a secondary battery thereof, for compensating the active lithium loss of the battery cell and thereby improving the initial capacity and cycle life of the battery cell.

To achieve the object described above, the technical solution of the present application includes the following:
a composite lithium supplement separator comprises a porous matrix membrane; a lithium-containing layer is arranged on one side of the porous matrix membrane; the lithium-containing layer comprises a lithium source, an inorganic ceramic powder and a binder; the lithium source has a gradient distribution in thickness direction of the lithium-containing layer, and has a relatively low mass proportion on the side close to the surface of the porous matrix membrane and a relatively high mass proportion of the lithium source on the side away from the surface of the porous matrix membrane.

Optionally, a protective layer is further arranged on the surface of the lithium-containing layer away from the porous matrix membrane, and the protective layer is continuously distributed on the surface of the lithium-containing layer, and has a porosity of 10% to 50%, optionally 15% to 30%. With the porosity of less than 10%, the transport path of lithium ion can not be smooth, and there will be a relatively large internal resistance of the battery cell and a risk of lithium precipitation; With the porosity of more than 50%, the lithium-containing layer will have a relatively large exposed area, and the inorganic ceramic layer can't provide a significant protection, thereby leading the lithium-containing layer to a relatively low lithium efficiency. The protective layer is the inorganic ceramic layer with a thickness of 0.1 µm to 5 µm, optionally 0.2 µm to 2 µm. If the inorganic ceramic layer had a thickness larger than 5 µm, the separator would have a relatively large overall thickness, resulting in a decrease in the volumetric energy density of the battery cell; moreover, if the thickness were too large, there would be an increased lithium ion transport path and a risk of increased internal resistance of the battery cell.

Optionally, a percentage of the lithium source mass in the total mass of lithium-containing layer is 0 to 80%, optionally 30% to 50%, and a mass ratio of the binder to the inorganic ceramic powder is 1:0.5-10. If the overall lithium source content were too low, there would be no lithium supplement effect; if the overall lithium source content were too high, the lithium source content of the lithium-containing layer close to the matrix membrane would be difficult to control within a small percentage range; the lithium source is entirely, or partially at least, enclosed in the binder and the inorganic ceramic. After enclosed, the lithium source, especially the lithium powder, can be further prevented from contacting with the external environment, thereby avoiding the side reaction between lithium source and the air, and reducing the risk of lithium source to lose reactivity.

Optionally, the lithium source is a lithium metal powder, optionally SLMP (Stabilized Lithium Metal Powder).

Optionally, the lithium source is a lithium-containing compound, selecting from at least one of Li₂NiO₂, Li₂CuO₂, Li₆CoO₄, LisFeO₄, Li₆MnO₄, Li₂MoO₃, Li₃N, Li₂O, LiOH and Li₂CO₃.

Optionally, the porous matrix membrane is selected from any one or a combination of at least two of polyethylene (PE), polypropylene (PP), polyvinylidene difluoride (PVDF), aramid, polyacrylonitrile, polyimide, polyamide, polyester and natural fiber.

Optionally, the inorganic ceramic powder is selected from any one or a combination of at least two of alumina trioxide, silicon dioxide, titanium dioxide, zirconium dioxide, tin dioxide, zinc oxide, calcium oxide, magnesium oxide, magnesium nitride and boehmite.

Optionally, the protective layer comprises inorganic ceramic particles and a polymer binder, and the inorganic ceramic particles are selected from any one or a combination of at least two of aluminum oxides, magnesium oxides, calcium oxides and zirconium oxides, and have a particle size of 0.02 µm to 3 µm, optionally 0.05 µm to 1 µm. The selection of inorganic ceramic particles with a small particle size can help to form a thin inorganic coating.

Optionally, the lithium-containing layer has a composite layer structure or a multilayer structure of which the lithium source concentration has a continuous and gradient distribution, and the lithium-containing layer with multilayer structure is formed by multiple coating.

Another object of the present application is to provide a lithium ion secondary battery, comprising a positive electrode plate, a negative electrode plate, a separator arranged between the positive electrode plate and the negative electrode plate at intervals, an electrolyte and a case; the separator is the composite lithium supplement separator according to any one of claims 1 to 9; when a lithium-containing compound is selected as the lithium source, the lithium-containing layer of the composite lithium supplement separator is arranged facing the positive electrode plate; when a lithium powder is selected as the lithium source, the lithium-containing layer of the composite lithium supplement separator is arranged facing the negative electrode plate.

Compared to the prior art, the composite lithium supplement separator provided in the application has the advantages described below.
(1) A lithium supplement separator for the lithium ion secondary battery is provided, which can significantly compensate for the irreversible active lithium loss during the initial charge process of a lithium ion battery and for the active lithium consumption during long-term use; there is no need to supply lithium through additional positive and negative electrode plates, which greatly simplifies the process and has lower safety risks during production.
(2) The lithium-containing layer consists of the inorganic ceramic, lithium source and binder; the introduction of inorganic ceramic improves the strength of lithium-containing layer; after the lithium source is consumed, such layer can still be used as a high-temperature resistant layer to improve the safety performance of battery cell; the lithium source has a gradient distribution in the lithium-containing layer, and has a relatively low lithium source content at the side close to the porous matrix membrane, which may effectively reduce the contact area of lithium metal powder or lithium-containing compounds with the matrix membrane; without an additional ceramic buffer layer arranged between the matrix membrane and the lithium-containing layer, it could be effectively avoided lithium source, such as lithium powder, being embedded in the matrix membrane pores, thus avoiding the degradation of the battery cell performance caused by blocking of the matrix membrane pores.
(3) A protective layer is added to the surface of the lithium-containing layer, and the protective layer is continuously distributed with a porosity of 10% to 50%, optionally 15% to 30%, which may effectively isolate the lithium source from the atmospheric environment, thereby increasing the availability of lithium source; moreover, when such composite lithium supplement separator is applied to battery, the continuous protective layer can be used as a transition layer to effectively control the speed of the active lithium entering the electrode plate and participating in the reaction, ensuring the reaction is uniform and effectively avoiding the local overheating problem of the battery caused by the too fast reaction rate; in particular, the protective layer is an ultra-thin inorganic coating, which can reduce the overall thickness of the separator and thus increase the energy density of the battery cell.

### BRIEF DESCRIPTION OF DRAWINGS

The drawings, which form a part of the present application, are intended to provide a further understanding of the present application, and the illustrative embodiments of the present application and the description thereof are intended to explain the present application and should not be considered as improperly limitation to the present application. In the drawings:
FIG. 1 is a schematic structure diagram of the composite lithium supplement separator in an embodiment of the present application;
FIG. 2 is a schematic structure diagram of the lithium supplement separator in Comparative Example 4 of the present application.

### DETAILED DESCRIPTION

Unless defined otherwise, the technical terms used in the embodiments described below have the same meaning as those generally understood by those skilled in the art where the present application belongs. The test reagents used in the embodiments described below are conventional biochemical reagents, unless specified otherwise; and the experimental methods are conventional methods, unless specified otherwise.

The present application is described in detail below by combining with the embodiments and drawings.

### Example 1

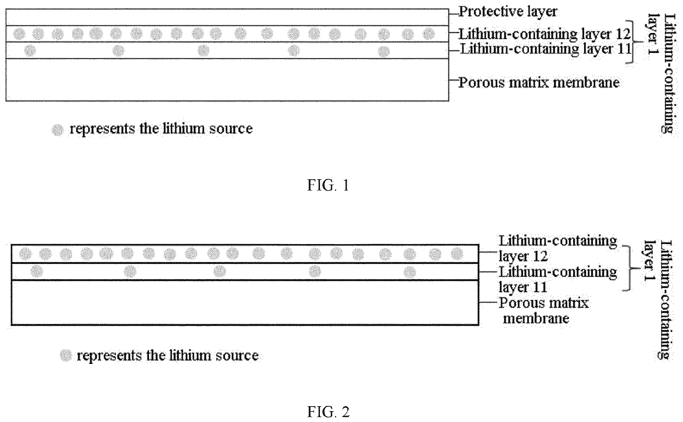

As shown in the FIG. 1, the composite lithium supplement separator had a porous matrix membrane (PP film, 9 µm); a lithium-containing layer 1 was arranged at one side of the matrix membrane, and the lithium-containing layer 1 consisted of a lithium-containing layer 11 and a lithium-containing layer 12. In the lithium-containing layer 11 close to the matrix membrane, the lithium source had a mass proportion of 10% and a thickness of 2 µm, and in the lithium-containing layer 12 away from the porous matrix membrane, the lithium source had a mass proportion of 50% and a thickness of 2 µm; an inorganic ceramic protective layer was further arranged on the surface of the lithium-containing layer, with a thickness of 2 µm and a porosity of 30%.
1) A method for preparing the composite lithium supplement separator includes the following steps.
   a) Preparation and coating of the lithium-containing layer 11 slurry
      The lithium powder SLMP, styrene-butadiene rubber, silicon dioxide and NMP (N-methyl pyrrolidone) were proportioned according to 1:2:7:10, and mixed uniformly to give the lithium supplement slurry; the lithium supplement slurry was coated on the PP porous film (using gravure printing process) to form the lithium-containing layer 11 with 2 µm thickness at one side of the matrix membrane.
   b) Preparation and coating of the lithium-containing layer 12 slurry
      The lithium powder SLMP, styrene-butadiene rubber, boehmite and NMP were proportioned according to 5:1:4:10, and mixed uniformly to obtain the lithium supplement slurry; the lithium supplement slurry was coated on the lithium-containing layer 11 (using gravure printing process) to form the lithium-containing layer 12 with 2 µm thickness on the surface of the lithium-containing layer 11.
   c) Preparation and coating of the ceramic coating slurry
      The styrene-butadiene rubber, boehmite (with an average particle size of 0.05 µm), polymethyl methacrylate and NMP were proportioned according to 1:7:2:10, and mixed uniformly to obtain the inorganic ceramic protective layer slurry; the slurry was coated on the lithium-containing layer 12 (using gravure printing process) to form the inorganic protective layer with 2 µm thickness on the surface of the lithium-containing layer 12.
2) Preparation of a pouch-type secondary battery with a capacity of 50 Ah: NCM811 was the active material for the positive electrode plate, the graphite: SiOx=8:2 was the active material for the negative electrode material, LiPF₆/ethylene carbonate (EC) + diethyl carbonate (DEC) (with a volume ratio of 1:1) was the electrolyte, the composite lithium supplement separator described above was selected as the separator, and the lithium-containing layer was arranged facing the negative electrode plate.

### Example 2

As shown in FIG. 1, the composite lithium supplement separator had a porous matrix membrane (PP film, 9 µm); a lithium-containing layer 1 was arranged at one side of the matrix membrane, and the lithium-containing layer 1 consisted of a lithium-containing layer 11 and a lithium-containing layer 12. In the lithium-containing layer 11 close to the matrix membrane, the lithium source had a mass proportion of 20% and a thickness of 2 µm, and in the lithium-containing layer 12 away from the porous matrix membrane, the lithium source had a mass proportion of 60% and a thickness of 3 µm; an inorganic ceramic protective layer was further arranged on the surface of the lithium-containing layer, with a thickness of 1 µm and a porosity of 15%.
1) A method for preparing the composite lithium supplement separator includes the following steps.
   a) Preparation and coating of the lithium-containing layer 11 slurry
      The lithium supplement material Li₂O, PVDF, Al₂O₃ and NMP were proportioned according to 2:1:7:10, and mixed uniformly to obtain the lithium supplement slurry; the lithium supplement slurry was coated on the PP porous film (using gravure printing process) to form the lithium-containing layer 11 with 2 µm thickness at one side of the matrix membrane.
   b) Preparation and coating of the lithium-containing layer 12 slurry
      The lithium supplement material Li₂O, PVDF, Al₂O₃ and NMP were proportioned according to 6:1:3:10, and mixed uniformly to obtain the lithium supplement slurry; the lithium supplement slurry was coated on the lithium-containing layer 11 (using gravure printing process) to form the lithium-containing layer 12 with 2 µm thickness on the surface of the lithium-containing layer 11.
   c) Preparation and coating of the ceramic coating slurry
      The styrene-butadiene rubber, boehmite (with an average particle size of 0.05 µm), polymethyl methacrylate and NMP were proportioned according to 1:8:1:10, and mixed uniformly to obtain the inorganic ceramic protective layer slurry; the slurry was coated on the lithium-containing layer 12 (using gravure printing process) to form the inorganic protective layer with 1 µm thickness on the surface of the lithium-containing layer 12.

3) Preparation of a pouch-type secondary battery with a capacity of 50 Ah: NCM622 was the active material for the positive electrode plate, the graphite: SiOx=9:1 was the active material for the negative electrode material, LiPF₆/EC+DEC (with a volume ratio of 1:1) was the electrolyte, the composite lithium supplement separator described above was selected as the separator, and the lithium-containing layer was arranged facing the positive electrode plate.

### Example 3

As shown in the FIG. 1, the composite lithium supplement separator had a porous matrix membrane (PE film, 12 µm); a lithium-containing layer 1 was arranged at one side of the matrix membrane, and the lithium-containing layer 1 consisted of a lithium-containing layer 11 and a lithium-containing layer 12. In the lithium-containing layer 11 close to the matrix membrane, the lithium source had a mass proportion of 15% and a thickness of 2 µm, and in the lithium-containing layer 12 away from the porous matrix membrane, the lithium source had a mass proportion of 45% and a thickness of 2 µm; an inorganic ceramic protective layer was further arranged on the surface of the lithium-containing layer, with a thickness of 1 µm and a porosity of 25%.
1) A method for preparing the composite lithium supplement separator includes the following steps.
   a) Preparation and coating of the lithium-containing layer 11 slurry
      The lithium powder SLMP, styrene-butadiene rubber, silicon dioxide and NMP were proportioned according to 15:20:65:100, and mixed uniformly to obtain the lithium supplement slurry; the lithium supplement slurry was coated on the PP porous film (using gravure printing process) to form the lithium-containing layer 11 with 2 µm thickness at one side of the matrix membrane.
   b) Preparation and coating of the lithium-containing layer 12 slurry
      The lithium powder SLMP, styrene-butadiene rubber, boehmite and NMP were proportioned according to 45:15:40:100, and mixed uniformly to obtain the lithium supplement slurry; the lithium supplement slurry was coated on the lithium-containing layer 11 (using gravure printing process) to form the lithium-containing layer 12 with 2 µm thickness on the surface of the lithium-containing layer 11.
   c) Preparation and coating of the ceramic coating slurry
      The styrene-butadiene rubber, boehmite (with an average particle size of 0.05 µm), polymethyl methacrylate and NMP were proportioned according to 2:6:2:10, and mixed uniformly to obtain the inorganic ceramic protective layer slurry; the slurry was coated on the lithium-containing layer 12 (using gravure printing process) to form the inorganic protective layer with 1 µm thickness on the surface of the lithium-containing layer 12.
2) Preparation of a pouch-type secondary battery with a capacity of 50 Ah: lithium iron phosphate was the active material for the positive electrode plate, the artificial graphite was the active material for the negative electrode material, LiPF₆/EC+DEC (with a volume ratio of 1:1) was the electrolyte, the composite lithium supplement separator described above was selected as the separator, and the lithium-containing layer was arranged facing the negative electrode plate.

### Comparative Example 1

Preparation of a pouch-type secondary battery with a capacity of 50 Ah: NCM811 was the active material for the positive electrode plate, the graphite: SiOx=8:2 was the active material for the negative electrode material, LiPF₆/EC+DEC (with a volume ratio of 1:1) was the electrolyte, the PP matrix membrane (9 µm) + ceramic coating (2 µm) + ceramic coating (2 µm) was selected as the separator. The ceramic coating consisted of inorganic boehmite particles, polymethyl methacrylate (the binder) and the styrene-butadiene rubber.

### Comparative Example 2

Preparation of a pouch-type secondary battery with a capacity of 50 Ah: lithium iron phosphate was the active material for the positive electrode plate, the artificial graphite was the active material for the negative electrode material, LiPF₆/EC+DEC (with a volume ratio of 1:1) was the electrolyte, the PE matrix membrane (12 µm) + ceramic coating (2 µm) + ceramic coating (3 µm) was selected as the separator. The ceramic coating consisted of inorganic boehmite particles, polymethyl methacrylate (the binder) and the styrene-butadiene rubber.

Comparative Example 3
1) A method for preparing the composite lithium supplement separator includes the following steps.
   The lithium powder SLMP, styrene-butadiene rubber and NMP were proportioned according to 3:7:10, and mixed uniformly to obtain the lithium supplement slurry; the lithium supplement slurry was coated on the PP porous film of 9 µm (using gravure printing process) to form the lithium-containing layer with 4 µm thickness at one side of the matrix membrane, so as to give the lithium supplement separator.
2) Preparation of a pouch-type secondary battery with a capacity of 50 Ah: NCM811 was the active material for the positive electrode plate, the graphite: SiOx=8:2 was the active material for the negative electrode material, LiPF₆/EC+DEC (with a volume ratio of 1:1) was the electrolyte, the composite lithium supplement separator described above was selected as the separator, and the lithium-containing layer was arranged facing the negative electrode plate. The ceramic layer consisted of inorganic boehmite particles, polymethyl methacrylate (the binder) and the styrene-butadiene rubber.

### Comparative Example 4

As shown in the FIG. 2, the composite lithium supplement separator had a porous matrix membrane (PP film, 9 µm); a lithium-containing layer 1 was arranged at one side of the matrix membrane, and the lithium-containing layer 1 consisted of a lithium-containing layer 11 and a lithium-containing layer 12. In the lithium-containing layer 11 close to the matrix membrane, the lithium source had a mass proportion of 10% and a thickness of 2 µm, and in the lithium-containing layer 12 away from the porous matrix membrane, the lithium source had a mass proportion of 50% and a thickness of 2 µm.
1) A method for preparing the composite lithium supplement separator includes the following steps.
   a) Preparation and coating of the lithium-containing layer 11 slurry
      The lithium powder SLMP, styrene-butadiene rubber, silicon dioxide and NMP were proportioned according to 1:2:7:10, and mixed uniformly to obtain the lithium supplement slurry; the lithium supplement slurry was coated on the PP porous film (using gravure printing process) to form the lithium-containing layer 11 with 2 µm thickness at one side of the matrix membrane.
   b) Preparation and coating of the lithium-containing layer 12 slurry
      The lithium powder SLMP, styrene-butadiene rubber, boehmite and NMP were proportioned according to 5:1:4:10, and mixed uniformly to give the lithium supplement slurry; the lithium supplement slurry was coated on the lithium-containing layer 11 (using gravure printing process) to form the lithium-containing layer 12 with 2 µm thickness on the surface of the lithium-containing layer 11.
2) Preparation of a pouch-type secondary battery with a capacity of 50 Ah: NCM811 was the active material for the positive electrode plate, the graphite: SiOx=8:2 was the active material for the negative electrode material, LiPF₆/EC+DEC (with a volume ratio of 1:1) was the electrolyte, the composite lithium supplement separator described above was selected as the separator, and the lithium-containing layer was arranged facing the negative electrode plate.

The performance of the examples and comparative examples was tested, and the specific test items, methods and the analysis of test result are described below.
1) Energy density test
The battery cell was charged to 4.2 V at 0.33 C by constant current-constant voltage charging with a cut-off current of 0.05 C; then the battery cell was discharged to 2.5 V at 0.33 C, and the discharge energy was recorded in this step. The battery cell was weighed, and its weight value was recorded. In the end, the energy density of the battery cell = 0.33 C discharge energy / weight of the battery cell.
2) Direct current (DC) internal resistance test
a) State of charge (SOC) adjustment: the battery cell was subjected to standing at 25°C for 2h, and then charged to 4.2 V at 0.33 C by constant current-constant voltage charging with a cut-off current of 0.05 C; then the battery cell was discharged to 2.5 V at 0.33 C, and the discharge capacity (Co) was recorded in this step; then the battery cell was charged to 50% Co at 0.33 C. In the end, the battery cell was subjected to standing for 3 h. The Vo of the final battery cell was recorded.
b) DC internal resistance test: after SOC adjustment was completed, the battery cell was discharge at 1 C rate for 15 s, and the end voltage Vi was recorded. DC internal resistance = (Vo-Vi)/50^{∗}1000.

3) Cycle life test
The battery cell was charged to 4.2 V at 0.33 C by constant current-constant voltage charging with a cut-off current of 0.05 C; then the battery cell was discharged to 2.5 V at 0.33 C. The charge-discharge cycles were continuously performed according to the above step until the capacity of the battery cell reduced to 80% of the initial capacity. The actual cycle number of the battery cell was recorded.
4) Analysis of the test result
As can be seen from Table 1, for NCM ternary batteries, by adopting the lithium supplement separator in Example 1 of the present application, rather than the separator without lithium supplement in Comparative Example 1, the lithium supplement separator with non-gradient lithium source in Comparative Example 3 or the lithium supplement separator without protective layer in Comparative Example 4, the energy density of the battery cell was significantly improved, the DC internal resistance of the battery cell was reduced, and the cycle life of the battery cell was also significantly improved. For batteries of lithium iron phosphate system, by adopting the lithium supplement separator in Example 3 of the present application, rather than the separator without lithium supplement in Comparative Example 2, the energy density of the battery cell was significantly improved, the DC internal resistance of the battery cell was reduced, and the cycle life of the battery cell was also significantly improved

**Table 1 Comparison among key performance of the examples and comparative examples**

| Term | Energy density (Wh/kg) | DC internal resistance (mohm, 50% SOC, 1C, 15s, 25°C) | Cycle number (1C/1C, 25°C reducing to 80% SOH (State of health)) |
|---|---|---|---|
| Example 1 | 290 | 2.35 | 1500 |
| Example 2 | 275 | 2.39 | 1500 |
| Example 3 | 200 | 2.48 | >5000 |
| Comparative Example 1 | 270 | 2.68 | 700 |
| Comparative Example 2 | 190 | 2.69 | 3000 |
| Comparative Example 3 | 275 | 2.65 | 800 |
| Comparative Example 4 | 280 | 2.55 | 800 |

The present application provides a composite lithium supplement separator and a secondary battery thereof, which may effectively compensate for the irreversible active lithium loss during the initial charge without additional lithium supplement on the surface of the positive or negative electrode plate, thereby significantly improving the energy density and cycle life of the lithium ion secondary battery. Secondly, the lithium-containing layer of the composite separator in the present application has the lithium source of gradient distribution, and has a relatively low active lithium content at the side close to the surface of matrix membrane, which may effectively reduce the contact area of lithium metal powder or lithium-containing compounds with the matrix membrane, reduce the risk of possible blockage of the micro-pores of the matrix membrane and thus improve the battery cell performance. Additionally, such lithium-containing layer includes a lithium source, an inorganic ceramic and an organic binder. The addition of inorganic ceramic may significantly improve the strength of lithium-containing layer, and after the lithium source is consumed, such layer can still be used as a high-temperature resistant layer to improve the safety performance of battery cell. Finally, the introduction of the inorganic ceramic protective layer, which is continuously distributed, on the lithium-containing surface may greatly avoid direct contact between the lithium metal powder or lithium-containing compounds and the external environment, increasing the availability of lithium source; moreover, when the lithium source is lithium powder, the continuous protective layer can also be used as a transition layer to effectively control the active lithium to be uniformly enclosed in the electrode plate, avoiding the local overheating problem of the battery caused by the too fast reaction rate.

The foregoing is only the preferred embodiments of the present application and is not intended to limit the present application. The scope of the present application is limited by the appended claims.

## Claims

1. A composite lithium supplement separator, comprising a porous matrix membrane, wherein a lithium-containing layer is arranged at one side of the porous matrix membrane, and the lithium-containing layer comprises a lithium source, an inorganic ceramic powder and a binder, and the lithium source has a gradient distribution in thickness direction of the lithium-containing layer, and has a relatively low mass proportion on the side close to the surface of the porous matrix membrane and a relatively high mass proportion on the side away from the surface of the porous matrix membrane.

2. The composite lithium supplement separator according to claim 1, wherein a percentage of the lithium source mass in the total mass of lithium-containing layer is 0 to 80%, and a mass ratio of the binder to the inorganic ceramic powder is 1:0.5-10; the lithium source is entirely, or partially at least, enclosed in the binder and the inorganic ceramic.

3. The composite lithium supplement separator according to claim 1 or 2, wherein a protective layer is further arranged on the surface of the lithium-containing layer away from the porous matrix membrane, and the protective layer is continuously distributed on the surface of the lithium-containing layer, and has a porosity of 10% to 50%, optionally 15% to 30%; the protective layer is an inorganic ceramic layer with a thickness of 0.1 µm to 5 µm,optionally 0.2 µm to 2 µm.

4. The composite lithium supplement separator according to claim 3, wherein the protective layer has a porosity of 15% to 30%;
optionally, the protective layer has a thickness of 0.2 µm to 2 µm.

5. The composite lithium supplement separator according to any one of claims 1 to 4, wherein the lithium source is a lithium metal powder, optionally SLMP

6. The composite lithium supplement separator according to any one of claims 1 to 4, wherein the lithium source is a lithium-containing compound, selecting from at least one of Li₂NiO₂, Li₂CuO₂, Li₆CoO₄, Li₅FeO₄, Li₆MnO₄, Li₂MoO₃, Li₃N, Li₂O, LiOH and Li₂CO₃.

7. The composite lithium supplement separator according to any one of claims 1 to 4, wherein the porous matrix membrane is selected from any one or a combination of at least two of polyethylene, polypropylene, polyvinylidene difluoride, aramid, polyacrylonitrile, polyimide, polyamide, polyester and natural fiber.

8. The composite lithium supplement separator according to any one of claims 1 to 4, wherein the inorganic ceramic powder is selected from any one or a combination of at least two of alumina trioxide, silicon dioxide, titanium dioxide, zirconium dioxide, tin dioxide, zinc oxide, calcium oxide, magnesium oxide, magnesium nitride and boehmite.

9. The composite lithium supplement separator according to any one of claims 1 to 4, wherein the protective layer comprises inorganic ceramic particles and a polymer binder, and the inorganic ceramic particles are selected from any one or a combination of at least two of aluminum oxides, magnesium oxides, calcium oxides and zirconium oxides, and have a particle size of 0.02 µm to 3 µm, optionally 0.05 µm to 1 µm.

10. The composite lithium supplement separator according to any one of claims 1 to 4, wherein the lithium-containing layer has a composite layer structure or a multilayer structure of which the lithium source concentration has a continuous and gradient distribution, and the lithium-containing layer with multilayer structure is formed by multiple coating.

11. A lithium ion secondary battery, comprising a positive electrode plate, a negative electrode plate, a separator arranged between the positive electrode plate and the negative electrode plate at intervals, an electrolyte and a case, wherein the separator is the composite lithium supplement separator according to any one of claims 1 to 10, wherein when a lithium-containing compound is selected as the lithium source, the lithium-containing layer of the composite lithium supplement separator is arranged facing the positive electrode plate; when a lithium powder is selected as the lithium source, the lithium-containing layer of the composite lithium supplement separator is arranged facing the negative electrode plate.
